# EUROPEAN PATENT APPLICATION

(11) **EP 4 738 933 A1**
(43) Date of publication of application: **06.05.2026**
(21) Application number: 24855776.1
(22) Date of filing: 19.08.2024
(51) Int. Cl.: H04W 48/04

(54) **ACCESS METHOD AND APPARATUS**

(30) Priority: 21.08.2023 CN 202311057813
(71) Applicant: Huawei Technologies Co., Ltd., Shenzhen, Guangdong 518129 (CN)
(72) Inventor: CHEN, Ying, Shenzhen, Guangdong 518129 (CN); DU, Yinggang, Shenzhen, Guangdong 518129 (CN); QIAO, Yunfei, Shenzhen, Guangdong 518129 (CN)
(74) Representative: Körber, Martin Hans
(86) International application number: PCT/CN2024/113092
(87) International publication number: WO 2025/040053

(57) **Abstract**

This application relates to the field of communication technologies, and discloses an access method and an apparatus, to reduce unnecessary location verification during access of a terminal device, and reduce an access failure probability of the terminal device. The method includes: A terminal device determines whether location verification needs to be performed on an accessed terminal device in one or more service areas; and the terminal device initiates access to a first service area, where the first service area belongs to the one or more service areas, and the first service area is a service area in which location verification does not need to be performed on the accessed terminal device.

## Description

### CROSS-REFERENCE TO RELATED APPLICATIONS

This application claims priority to Chinese Patent Application No. 202311057813.X, filed with the China National Intellectual Property Administration on August 21, 2023 and entitled "ACCESS METHOD AND APPARATUS", which is incorporated herein by reference in its entirety.

### TECHNICAL FIELD

This application relates to the field of communication technologies, and in particular, to an access method and an apparatus.

### BACKGROUND

A non-terrestrial network (non-terrestrial network, NTN) like a satellite has advantages such as wide coverage, a long communication distance, high reliability, high flexibility, and a high throughput, and is not affected by a geographical environment, a climate condition, and a natural disaster. Therefore, the NTN has been widely applied to fields such as aviation communication, maritime communication, and military communication. The NTN is introduced into a mobile communication system, for example, a 5th generation (5th generation, 5G) system, so that not only a communication service can be provided for an area that is difficult to be covered by a terrestrial network, for example, a sea or a forest, but also communication reliability can be enhanced, for example, more stable communication services with better quality are provided for a train, an airplane, and users on such means of transportation, and more data transmission resources are provided, for example, connections of more terminal devices are supported.

Currently, NTN communication has been introduced into the 3rd generation partnership project (3rd generation partnership project, 3GPP) standard. However, a network device like a satellite usually has large beam coverage, and may cover a plurality of countries, and laws and regulations of different countries may be different. Therefore, the network device like the satellite needs to verify a location of a terminal device. However, due to capabilities and other reasons, some terminal devices do not support location verification, and an access failure is caused.

### SUMMARY

Embodiments of this application provide an access method and an apparatus, to reduce unnecessary location verification during access of a terminal device, and reduce an access failure probability of the terminal device.

According to a first aspect, an embodiment of this application provides an access method. The method may be performed by a first communication apparatus. The first communication apparatus herein may be a terminal device, or may be a processor, a module, a chip, a chip system, or the like that is in the terminal device and that implements the method. The method includes: A first communication apparatus determines whether location verification needs to be performed on an accessed terminal device in one or more service areas; and the first communication apparatus initiates access to a first service area, where the first service area belongs to the one or more service areas, and the first service area is a service area in which location verification does not need to be performed on the accessed terminal device. Optionally, the service area may be a service (or coverage) area of one or more beams, a partial service (or coverage) area of a cell, a service (or coverage) area corresponding to one or more cells, or the like.

According to the foregoing method, the service areas may be classified, based on whether the service areas cross geographical areas (for example, countries or regions), into a service area in which location verification needs to be performed on the accessed terminal device and a service area in which location verification does not need to be performed on the accessed terminal device. The first communication apparatus (for example, the terminal device) that supports or does not support location verification may preferably select the service area in which location verification does not need to be performed on the accessed terminal device to initiate access. This reduces unnecessary location verification, can reduce an access failure probability of the first communication apparatus that does not support location verification, and reduces power consumption caused by an access failure of the first communication apparatus.

In addition, in the foregoing method, a granularity for performing location verification on the accessed terminal device may be a service (or coverage) area of one or more beams, a partial service (or coverage) area of a cell, or the like, instead of only a cell. This can reduce an area that is in a cell and in which location verification needs to be performed on an accessed terminal device, and reduce the unnecessary location verification.

In a possible design, the one or more service areas are candidate service areas to which the first communication apparatus initiates access, the one or more service areas form a set of candidate service areas to which the first communication apparatus initiates access, and the method further includes: When there is at least one second service area that is in the one or more service areas and in which location verification needs to be performed on the accessed terminal device, the first communication apparatus removes the at least one second service area from the set of candidate service areas.

According to the foregoing design, the first communication apparatus can delete, from the set of candidate service areas that meets an access (or camping) requirement, the second service area in which location verification needs to be performed on the accessed terminal device, so that the first communication apparatus can be prevented from selecting the second service area in which location verification needs to be performed on the accessed terminal device to initiate access. This reduces the access failure probability of the first communication apparatus that does not support location verification, and reduces the power consumption caused by the access failure of the first communication apparatus.

In a possible design, that the first communication apparatus determines whether location verification needs to be performed on the accessed terminal device in the one or more service areas includes: The first communication apparatus receives a first message, where the first message includes one or more of first indication information indicating whether location verification needs to be performed on the accessed terminal device in the first service area (or whether the first service area crosses geographical areas), public land mobile network (public land mobile network, PLMN) information corresponding to the first service area, and a location of a reference point of the first service area; and the first communication apparatus determines, based on the first message, whether location verification needs to be performed on the accessed terminal device in the first service area.

According to the foregoing design, whether location verification needs to be performed on the accessed terminal device in the service area can be indicated in an explicit indication manner based on the first indication information and an implicit indication manner based on the PLMN information and the location of the reference point. This helps the terminal device accurately learn of information about whether location verification needs to be performed on the accessed terminal device in the service area.

In a possible design, the first message includes the PLMN information corresponding to the first service area, and that the first communication apparatus determines, based on the first message, whether location verification needs to be performed on the accessed terminal device in the first service area includes: When the first service area corresponds to a PLMN of one geographical area, the first communication apparatus determines that location verification does not need to be performed on the accessed terminal device in the first service area.

According to the foregoing design, the first communication apparatus may learn, based on the PLMN information of the service area, whether location verification needs to be performed on the accessed terminal device in the service area, and there is no need to indicate, to the first communication apparatus by using additional signaling or an additional field, whether location verification needs to be performed on the accessed terminal device in the service area. This can reduce signaling overheads.

In a possible design, the first message includes the location of the reference point of the first service area, and that the first communication apparatus determines, based on the first message, whether location verification needs to be performed on the accessed terminal device in the first service area includes: When a distance between the reference point of the first service area and a boundary between geographical areas is greater than a first threshold, the first communication apparatus determines that location verification does not need to be performed on the accessed terminal device in the first service area.

According to the foregoing design, the first communication apparatus can select, based on the distance between the location of the reference point of the service area and the boundary between geographical areas, the service area for access. This helps the first communication apparatus select the service area in which location verification does not need to be performed on the accessed terminal device to initiate access, reduces the access failure probability of the first communication apparatus that does not support location verification, and reduces the power consumption caused by the access failure of the first communication apparatus.

In a possible design, that the first communication apparatus determines whether location verification needs to be performed on the accessed terminal device in the one or more service areas includes: The first communication apparatus determines a distance between a reference point of each candidate service area in the set of candidate service areas and a boundary between geographical areas; and the first communication apparatus determines that location verification needs to be performed on the accessed terminal device in N candidate service areas that are in the set of candidate service areas and whose reference points have a smallest distance from the boundary between geographical areas, and that location verification does not need to be performed on the accessed terminal device in M-N candidate service areas other than the N candidate service areas, where the set of candidate service areas includes M candidate service areas, M and N are integers, and N is less than M.

According to the foregoing design, the first communication apparatus can select, based on the distance between the location of the reference point of the service area and the boundary between geographical areas, the service area for access. This helps the first communication apparatus select the service area in which location verification does not need to be performed on the accessed terminal device to initiate access, reduces the access failure probability, and reduces the power consumption caused by the access failure of the first communication apparatus.

According to a second aspect, an embodiment of this application provides an access method. The method may be performed by a second communication apparatus. The second communication apparatus herein may be a network device, or may be a processor, a module, a chip, a chip system, or the like that is in the network device and that implements the method. The method includes: A second communication apparatus receives access initiated by a first communication apparatus to a first service area; and based on whether location verification needs to be performed on an accessed terminal device in the first service area, the second communication apparatus determines whether to accept the access of the first communication apparatus, or determines a service type provided for the first communication apparatus.

According to the foregoing method, the service areas may be classified, based on whether the service areas cross geographical areas, into a service area in which location verification needs to be performed on the accessed terminal device and a service area in which location verification does not need to be performed on the accessed terminal device, and based on whether location verification needs to be performed on the accessed terminal device in the service area to which the first communication apparatus (for example, the terminal device) initiates access, the second communication apparatus (for example, the network device) can determine whether to accept the access of the first communication apparatus, or determine the service type provided for the first communication apparatus.

In a possible design, that the second communication apparatus determines, based on whether location verification needs to be performed on the accessed terminal device in the first service area, whether to accept the access of the first communication apparatus includes: When location verification does not need to be performed on the accessed terminal device in the first service area, the second communication apparatus determines to accept the access of the first communication apparatus; when location verification needs to be performed on the accessed terminal device in the first service area, and the first communication apparatus supports location verification, the second communication apparatus determines to accept the access of the first communication apparatus; or when location verification needs to be performed on the accessed terminal device in the first service area, and the first communication apparatus does not support location verification, the second communication apparatus determines to reject the access of the first communication apparatus; and that the second communication apparatus determines, based on whether location verification needs to be performed in the first service area, the service type provided for the first communication apparatus includes: when location verification does not need to be performed on the accessed terminal device in the first service area, the second communication apparatus determines to provide a service of a first service type for the first communication apparatus; when location verification needs to be performed on the accessed terminal device in the first service area, and the first communication apparatus supports location verification, the second communication apparatus determines to provide a service of a first service type for the first communication apparatus; or when location verification needs to be performed on the accessed terminal device in the first service area, and the first communication apparatus does not support location verification, the second communication apparatus determines to provide a service of a second service type for the first communication apparatus.

The first service type may include an emergency call service and a non-emergency call service (for example, a common session service), and the second service type may include only an emergency call service.

According to the foregoing method, based on whether location verification needs to be performed on the accessed terminal device in the service area to which the first communication apparatus (for example, the terminal device) initiates access and whether the first communication apparatus supports location verification, the second communication apparatus (for example, the network device) can determine whether to accept the access of the first communication apparatus, or determine the service type provided for the first communication apparatus.

In a possible design, the method further includes: The second communication apparatus sends a first message to the first communication apparatus, where the first message includes one or more of first indication information indicating whether location verification needs to be performed on the accessed terminal device in the first service area (or whether the first service area crosses geographical areas), PLMN information corresponding to the first service area, and a location of a reference point of the first service area.

According to the foregoing design, whether location verification needs to be performed on the accessed terminal device in the service area can be indicated in an explicit indication manner based on the first indication information and an implicit indication manner based on the PLMN information and the location of the reference point. This helps the terminal device accurately learn of information about whether location verification needs to be performed on the accessed terminal device in the service area.

In a possible design, based on whether location verification needs to be performed on the accessed terminal device in the first service area, before the second communication apparatus determines whether to accept the access of the first communication apparatus, or determines the service type provided for the first communication apparatus, the method further includes: The second communication apparatus receives first information from the first communication apparatus, where the first information indicates whether the first communication apparatus supports location verification. Optionally, the first information includes information about whether the first communication apparatus supports location verification and/or a version number supported by the first communication apparatus, where the version number is used to determine whether the first communication apparatus supports location verification.

According to the foregoing design, the second communication apparatus can determine, based on the first information reported by the first communication apparatus, whether the first communication apparatus supports location verification. This helps improve accuracy of determining, by the second communication apparatus, whether to accept the access of the first communication apparatus, or determining the service type provided for the first communication apparatus.

According to a third aspect, an embodiment of this application provides a communication apparatus. The apparatus has a function of implementing the method according to the first aspect or the second aspect. The function may be implemented by hardware, or may be implemented by hardware executing corresponding software. The hardware or the software includes one or more modules corresponding to the function, for example, a communication unit and a processing unit.

According to a fourth aspect, an embodiment of this application provides a communication apparatus, including a processor. The processor is configured to perform the methods according to the foregoing aspects.

Optionally, the communication apparatus may further include a memory, configured to: store instructions executed by the processor, or store input data required for running the instructions by the processor or store data generated after the processor runs the instructions. The memory may be a physically independent unit, or may be coupled to the processor, or the processor includes the memory (that is, the processor and the memory are integrated).

In a possible implementation, the communication apparatus is a chip.

According to a fifth aspect, an embodiment of this application provides a communication system. The communication system includes a first communication apparatus (for example, a terminal device) and a second communication apparatus (for example, a network device). The first communication apparatus has a function of implementing the method according to first aspect, and the second communication apparatus has a function of implementing the method according to the second aspect.

According to a sixth aspect, an embodiment of this application further provides a computer-readable storage medium. The computer-readable storage medium stores a computer program or instructions, and when the computer program or the instructions are executed by a communication apparatus, the communication apparatus is enabled to perform the method according to the first aspect or the second aspect.

According to a seventh aspect, an embodiment of this application further provides a computer program product, including computer program code. When the computer program code is run (for example, run by a processor), the method according to the first aspect or the second aspect may be implemented.

According to an eighth aspect, an embodiment of this application further provides a chip. The chip is configured to read a computer program stored in a memory, to perform the method according to the first aspect or the second aspect.

Optionally, the chip is coupled to a memory, or the memory is a part of the chip.

According to a ninth aspect, an embodiment of this application further provides a chip system. The chip system includes a processor, configured to support a computer apparatus in implementing the method according to the first aspect or the second aspect.

In a possible design, the chip system further includes a memory, and the memory is configured to store a program and data that are necessary for the computer apparatus. The chip system may include a chip or may include a chip and another discrete component.

For technical effect that can be achieved in the third aspect to the ninth aspect, refer to technical effect that can be achieved in the first aspect or the second aspect. Details are not described herein again.

### BRIEF DESCRIPTION OF DRAWINGS

FIG. 1 is a diagram of an architecture of a communication system according to an embodiment of this application;
FIG. 2A, FIG. 2B, and FIG. 2C are diagrams of communication scenarios according to embodiments of this application;
FIG. 3 is a diagram 1 of an access method according to an embodiment of this application;
FIG. 4 is a diagram of cell distribution according to an embodiment of this application;
FIG. 5 is a diagram 1 in which a terminal device initiates access according to an embodiment of this application;
FIG. 6 is a diagram 2 in which a terminal device initiates access according to an embodiment of this application;
FIG. 7 is a diagram 2 of an access method according to an embodiment of this application;
FIG. 8 is a diagram 1 of a structure of a communication apparatus according to an embodiment of this application; and
FIG. 9 is a diagram 2 of a structure of a communication apparatus according to an embodiment of this application.

### DESCRIPTION OF EMBODIMENTS

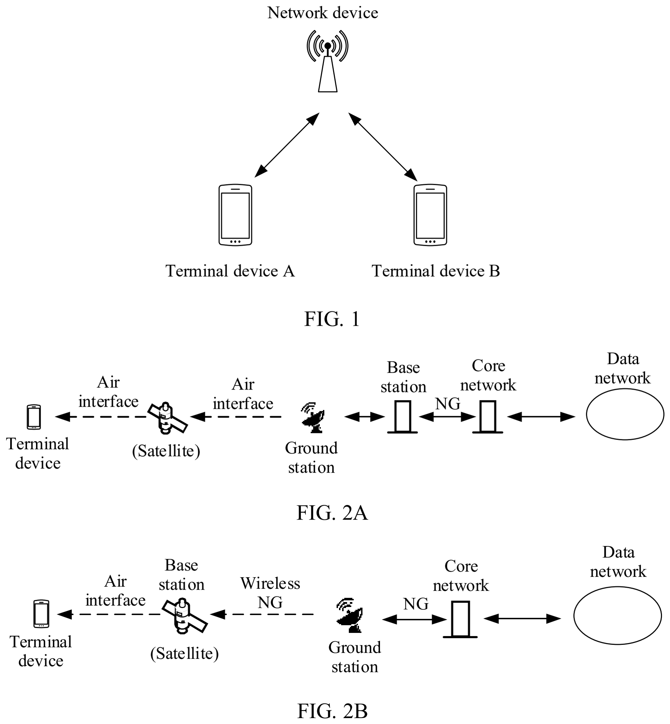

Technical solutions in embodiments of this application may be applied to various communication systems, for example, a 5G communication system and an NTN communication system, or may be applied to a communication system evolved after 5G, for example, a 6th generation (6th generation, 6G) communication system. FIG. 1 is a diagram of an architecture of a communication system according to an embodiment of this application. The communication system includes a network device and a terminal device. For example, there is one network device, and there are two terminal devices (a terminal device A and a terminal device B). The terminal device A and the terminal device B may separately or simultaneously communicate with the network device. It should be noted that a quantity of terminal devices and a quantity of network devices in the communication system shown in FIG. 1 are not limited in embodiments of this application.

The terminal device may also be referred to as a terminal (terminal), user equipment (user equipment, UE), a mobile station (mobile station, MS), a mobile terminal, or the like, and is an apparatus or a device having a wireless communication function. The terminal device may be widely used in various scenarios, for example, machine-type communication (machine-type communication, MTC), an internet of things (internet of things, IoT), vehicle-to-everything (vehicle-to-everything, V2X), virtual reality, augmented reality, industrial control, autonomous driving, telemedicine, a smart grid, smart furniture, smart office, a smart wearable, smart transportation, and a smart city. The terminal device may be a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), customer-premises equipment (customer-premises equipment, CPE), a smart point of sale (point of sale, POS) machine, a wearable device, a vehicle, an uncrewed aerial vehicle, a helicopter, an airplane, a ship, a robot, a robotic arm, a smart home device, an MTC device, a ground station, or the like. A specific technology and a specific device form that are used by the terminal device are not limited in embodiments of this application.

The network device may also be referred to as an access network (access network, AN) device or a radio access network (radio access network, RAN) device, and is an apparatus or a device that may be deployed in a radio access network to provide a wireless communication function for the terminal device. The network device may be a base station used for wireless communication, for example, an artificial earth satellite and high-altitude aircraft, for example, a medium earth orbit (medium earth orbit, MEO) satellite or a low earth orbit (low earth orbit, LEO) satellite of a non-geostationary earth orbit (non-geostationary earth orbit, NGEO), a high-altitude platform station (high-altitude platform station, HAPS), an evolved NodeB (evolved NodeB, eNB), or a 5G base station (gNB). Optionally, the network device in this embodiment of this application may include various forms of base stations, for example, a macro base station, a micro base station (also referred to as a small cell), a relay station, an access point, a device that implements a base station function in a communication system evolved after 5G, a transmitting and receiving point (transmitting and receiving point, TRP), a transmitting point (transmitting point, TP), a mobile switching center, and a device that performs a base station function in device-to-device (device-to-device, D2D), vehicle-to-everything (vehicle-to-everything, V2X), and machine-to-machine (machine-to-machine, M2M) communication, and may further include a central unit (central unit, CU), a distributed unit (distributed unit, DU), and the like in a cloud access network (cloud radio access network, C-RAN) system. This is not limited in embodiments of this application.

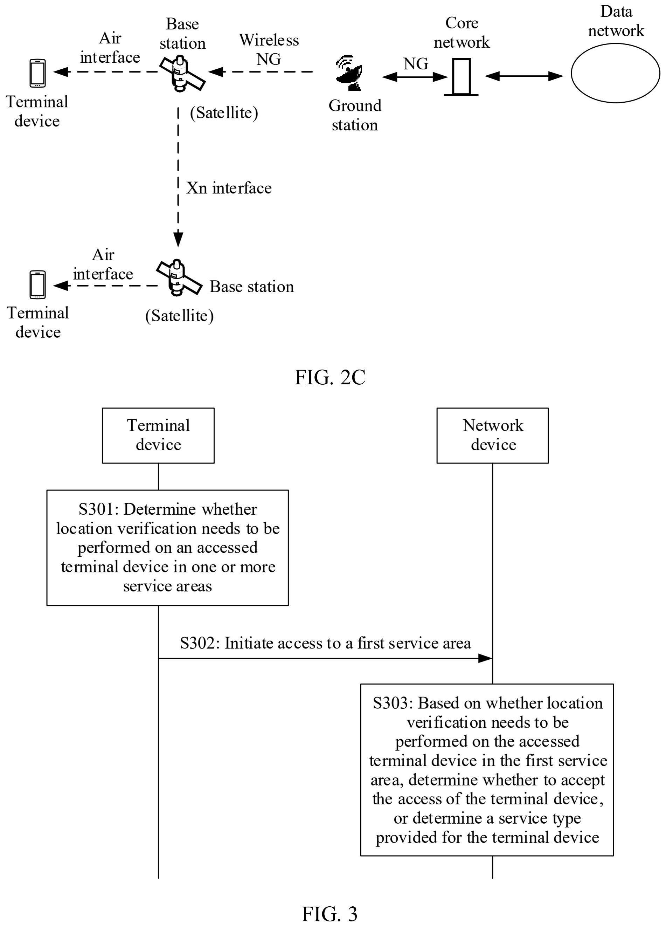

For example, the network device is a satellite. Communication scenarios to which embodiments of this application are specifically applied may be shown in FIG. 2A, FIG. 2B, and FIG. 2C.

In a scenario shown in FIG. 2A, a base station is deployed on the ground, a satellite is connected to a ground station through an air interface, and the ground station may be connected to the base station through a wireless or wired link. A terminal device on the ground accesses a mobile communication network through an air interface (where there may be various types of air interfaces, for example, a 5G air interface), and the satellite is used as a transmission node to forward information about the terminal device.

In a scenario shown in FIG. 2B, a base station is deployed on a satellite, the satellite is connected to a ground station through an air interface, and the ground station may be connected to a core network through a wireless or wired link. A terminal device on the ground communicates with the satellite base station through the air interface, to access a mobile communication network. As a base station, the satellite is connected to the ground station through an NG interface of the air interface, and the ground station is connected to the core network through the NG interface. The NG interface may be in a wireless form or a wired form.

Compared with the scenario shown in FIG. 2B, in a scenario shown in FIG. 2C, a communication scenario between satellite base stations is added. Specifically, the satellite base stations may communicate with each other through an Xn interface.

In FIG. 2A to FIG. 2C, the terminal device may include various types of terminal devices that support new radio, for example, the various types of terminals listed above. The terminal device may access a satellite network through the air interface and initiates services such as calls and internet access.

The base station is mainly configured to: provide a wireless access service, schedule a wireless resource to an accessed terminal device, and provide a reliable wireless transmission protocol, a data encryption protocol, and the like.

The core network is mainly configured to provide functions such as user access control, mobility management, session management, user security authentication, and charging. The core network includes a plurality of functional units, and the functional units may be classified into control-plane functional entities and data-plane functional entities.

The ground station is mainly responsible for forwarding signaling and service data between the satellite and the base station or between the satellite and the core network.

The air interface indicates a wireless link between the terminal device and the base station.

The Xn interface indicates an interface between the satellite base stations, and is mainly used for signaling exchange like handover.

The NG interface indicates an interface between the base station and the core network, an interface between the ground station and the core network, or an interface between the satellite base station and the ground station (in this case, the interface is a wireless link), and is mainly used to exchange signaling like non-access stratum (non-access stratum, NAS) signaling of the core network and service data of a user.

A non-terrestrial network device like a satellite has large beam coverage, and may cover areas of a plurality of countries. However, laws and regulations of different countries may be different. Therefore, when a terminal device performs cell selection or reselection and initiates access, the non-terrestrial network device like the satellite needs to learn of a location of the terminal device, and based on the location of the terminal device, provide different services according to different laws and regulations. Different from terrestrial communication in which a network device like a terrestrial base station may directly location a terminal device, in NTN communication, the terminal device may report its location, and the non-terrestrial network device like the satellite verifies the location reported by the terminal device. However, because location verification for the NTN communication is newly introduced into the R18 version of the 3GPP standard, there is already a problem that some terminal devices do not support location verification. As a result, when accessing an NTN cell of a satellite or the like, the terminal devices cannot access the NTN cell because the terminal devices do not support location verification.

In view of this, this application provides an access method and an apparatus, to reduce unnecessary location verification during access of a terminal device, and reduce an access failure probability of the terminal device. The following describes in detail embodiments of this application with reference to accompanying drawings.

In addition, it should be understood that ordinal numbers such as "first" and "second" mentioned in embodiments of this application are used to distinguish between a plurality of objects, and are not intended to limit sizes, content, a sequence, a time sequence, priorities, importance, or the like of the plurality of objects. For example, a first service area and a second service area do not indicate a difference in priorities, importance, or the like corresponding to the two service areas.

In embodiments of this application, unless otherwise specified, a quantity of nouns indicates "a singular noun or a plural noun", namely, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. A character "/" usually indicates an "or" relationship between the associated objects. For example, A/B indicates A or B. "At least one of the following items (pieces)" or a similar expression thereof refers to any combination of these items, including a single item (piece) or any combination of a plurality of items (pieces). For example, at least one item (piece) of a, b, or c indicates: a, b, c, a and b, a and c, b and c, or a, b, and c. Herein, a, b, and c may be singular or plural.

The access method provided in embodiments of this application may be performed by a first communication apparatus and a second communication apparatus. The first communication apparatus herein may be a terminal device, or may be a processor, a module, a chip, a chip system, or the like that is in the terminal device and that implements the method. The second communication apparatus may be a network device, or may be a processor, a module, a chip, a chip system, or the like that is in the network device and that implements the method. The following describes the access method provided in this application by using an example in which the first communication apparatus and the second communication apparatus are a first terminal device and a second terminal device respectively.

FIG. 3 is a diagram of an access method according to an embodiment of this application. The method includes the following steps.

S301: A terminal device determines whether location verification needs to be performed on an accessed terminal device in one or more service areas.

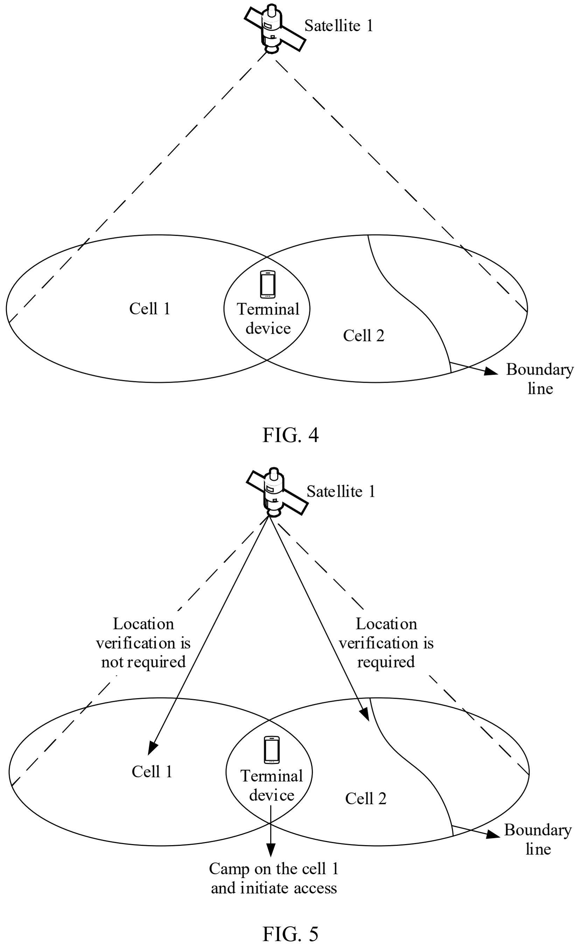

In a communication system, one network device may include one or more cells (cell), or one network device may serve one or more cells. For example, the network device is a satellite 1. Refer to a diagram of cell distribution shown in FIG. 4. It can be learned that the satellite 1 includes a cell 1 and a cell 2, and may provide a service for a terminal device located in the cell 1 and the cell 2.

A network device like a satellite or a high-altitude platform station usually has large beam coverage, a cell of the network device may cover a plurality of geographical areas (for example, different administrative divisions such as countries and regions), and laws and regulations of different geographical areas may be different. Therefore, the network device needs to verify a location of a terminal device, and based on the location of the terminal device, provide different services according to different laws and regulations.

It may be understood that, in this embodiment of this application, if two countries (or regions) correspond to a same PLMN and apply same laws and regulations, the two countries (or regions) may alternatively be used as one geographical area. If different areas (for example, provinces) in a same country (or region) correspond to different PLMNs and apply different laws and regulations, different areas in the same country (or region) each may alternatively be used as a geographical area. For example, a cell A covers provinces A1 and A2 in a country A. Although the provinces A1 and A2 belong to the country A, the provinces A1 and A2 correspond to different PLMNs and apply different laws and regulations. Therefore, a terminal device whose home region is the province A1 and that accesses the PLMN in the province A2 is performing roaming. In this case, the province A1 and the province A2 each may be used as a geographical area.

In this embodiment of this application, service areas of the network device may be classified into two types. One type is a service area whose coverage includes (or relates to) a plurality of geographical areas and in which location verification needs to be performed on an accessed terminal device, and the other type is a service area whose coverage includes (or relates to) only one geographical area and in which location verification does not need to be performed on an accessed terminal device. The service area may be a service (or coverage) area of one or more beams, a partial service (or coverage) area of a cell, a service (or coverage) area corresponding to one or more cells, or the like.

For example, the service area is a cell. Refer to the diagram of the cell distribution shown in FIG. 4. It can be learned that coverage of the cell 1 of the satellite 1 does not cross a geographical area boundary line, the coverage relates to only one geographical area, and the cell 1 does not need to perform location verification on an accessed terminal device. Coverage of the cell 2 of the satellite 1 crosses the geographical area boundary line, the coverage relates to a plurality of geographical areas, and the cell 2 needs to perform location verification on an accessed terminal device, to determine a geographical area in which the terminal device is located, so as to provide the terminal device with a service that complies with laws and regulations of the geographical area in which the terminal device is located.

Whether location verification needs to be performed on the accessed terminal device in the service area may be determined by the terminal device based on a first message from the network device corresponding to the service area. The first message may include one or more of first indication information indicating whether a first service area crosses geographical areas, PLMN information corresponding to the first service area, and a location of a reference point of the first service area. The following provides descriptions with reference to specific implementations.

In a possible implementation, the network device may send the first message through broadcast, multicast, or the like. The first message includes the first indication information indicating whether location verification needs to be performed on the accessed terminal device in the first service area. The terminal device may determine, based on the received first message, whether location verification needs to be performed on the accessed terminal device in the first service area.

For example, the first service area is a coverage area of a cell. The network device may broadcast the first message in the cell, and the first message may include a first field. When the first field is a first value, it indicates that the cell crosses the geographical areas and location verification needs to be performed on the accessed terminal device. When the first field is a second value, it indicates that the cell does not cross the geographical areas and location verification does not need to be performed on the accessed terminal device. When the first field in the first message is the first value, the terminal device may determine that location verification needs to be performed on the accessed terminal device in the cell (namely, the first service area). When the first field in the first message is the second value, determine that location verification does not need to be performed on the accessed terminal device in the cell (namely, the first service area). For example, the first field is 1 bit (bit). The first value may be 1, and the second value may be 0; or the first value may be 0, and the second value may be 1.

For example, the first service area is a coverage area of a first beam, and the first beam is a beam in a cell. The network device may broadcast the first message in the cell, and the first message may include a second field. The second field may include an identifier of one or more beams that are in the cell and on which location verification needs to be performed on the accessed terminal device. When the second field in the first message includes an identifier of the first beam, the terminal device may determine that location verification needs to be performed on the accessed terminal device on the first beam (namely, the first service area). When the second field in the first message does not include an identifier of the first beam, the terminal device may determine that location verification does not need to be performed on the accessed terminal device on the first beam (namely, the first service area).

For example, each synchronization signal block (synchronization signal/PBCH block, SSB) in the cell indicates a beam in one direction, beams in the cell include an SSB 1, an SSB 2, and an SSB 3, the first beam SSB 3 is a beam in the cell, and coverage of the SSB 3 crosses geographical areas. The network device adds an identifier (for example, an index of the SSB 3) of the SSB 3 to the second field in the first message broadcast in the cell. The terminal device may determine, based on the identifier of the SSB 3 carried in the second field in the first message, that location verification needs to be performed on the accessed terminal device on the first beam SSB 3. The SSB may include a synchronization signal and/or a physical broadcast channel (physical broadcast channel, PBCH), and the synchronization signal may include two parts: a primary synchronization signal (primary synchronization signal, PSS) and a secondary synchronization signal (secondary synchronization signal, SSS).

In another possible implementation, the network device may send the first message through broadcast, multicast, or the like. The first message includes the public land mobile network (public land mobile network, PLMN) information corresponding to the first service area. The terminal device may determine, based on the PLMN information corresponding to the first service area, whether location verification needs to be performed on the accessed terminal device in the first service area.

Currently, all cells broadcast PLMN information. One PLMN corresponds to one core network. If a cell crosses geographical areas, the broadcast message of the cell indicates PLMNs of at least two different geographical areas. If a cell does not cross geographical areas, a PLMN of the cell is related to only one geographical area. For example, the first service area is a coverage area of a cell. The network device may broadcast the first message in the cell, and the first message includes PLMN information corresponding to the cell. After receiving the first message, the terminal device may determine, based on the PLMN information corresponding to the cell (for example, one or more PLMN IDs corresponding to the cell), one or more PLMNs corresponding to the cell. When the cell corresponds to PLMNs of at least two geographical areas, the terminal device may determine that location verification needs to be performed on the accessed terminal device in the cell (namely, the first service area). When the cell corresponds to a PLMN of only one geographical area, the terminal device may determine that location verification needs to be performed on the accessed terminal device in the cell (namely, the first service area).

It should be understood that, in some special cases, for example, when laws and regulations applicable to PLMNs of two geographical areas (for example, countries) are the same, although one cell corresponds to PLMNs of at least two geographical areas, if a protocol or laws and regulations specify or a network device side indicates that the cell allows a terminal device that does not support location verification to initiate access, the terminal device may also determine the cell as a cell in which location verification does not need to be performed on the accessed terminal device.

In still another possible implementation, the network device may send the first message through broadcast, multicast, or the like. The first message includes the location of the reference point of the first service area. The terminal device may further determine, based on the location of the reference point of the first service area, whether location verification needs to be performed on the accessed terminal device in the first service area.

For example, the first service area is a coverage area of a cell. The network device may broadcast the first message in the cell, and the first message may include a location of a reference point of the cell. The reference point of the cell may be a center point, an edge point, any point, or the like in the cell. After receiving the first information, the terminal device may determine, based on whether a distance between the reference point of the cell and a boundary between geographical areas (namely, a boundary line) is less than or equal to a first threshold, whether location verification needs to be performed on the accessed terminal device in the cell (namely, the first service area).

For example, when the distance between the reference point of the cell and the boundary between geographical areas is less than or equal to the first threshold, the terminal device determines that location verification needs to be performed on the accessed terminal device in the cell (namely, the first service area). When the distance between the reference point of the cell and the boundary between geographical areas is greater than the first threshold, the terminal device determines that location verification does not need to be performed on the accessed terminal device in the cell (namely, the first service area). The boundary between geographical areas may be preconfigured in the terminal device, or may be sent by the network device or the like to the terminal device, or may be obtained by the terminal device from a map application (application, APP) in the terminal device. This is not limited in this application.

In addition, in the foregoing implementations, an example in which the first service area is a coverage area of a cell or a beam is used for description. It may be understood that when the first service area is a partial service (or coverage) area of a cell, the terminal device may determine, when location verification needs to be performed on the accessed terminal device in the cell, that location verification needs to be performed on the accessed terminal device in the first service area; and determine, when location verification does not need to be performed on the accessed terminal device in the cell, that location verification does not need to be performed on the accessed terminal device in the first service area.

When the first service area is a service (or coverage) area corresponding to one or more cells, the terminal device may determine, when there is at least one cell that is in the one or more cells corresponding to the first service area and in which location verification needs to be performed on the accessed terminal device, that location verification needs to be performed on the accessed terminal device in the first service area; and determine, when location verification does not need to be performed on the accessed terminal device in all of the one or more cells corresponding to the first service area, that location verification does not need to be performed on the accessed terminal device in the first service area.

When the first service area is a service (or coverage) area of a plurality of beams, the terminal device may determine, when there is at least one beam that is in the plurality of beams and on which location verification needs to be performed on the accessed terminal device, that location verification needs to be performed on the accessed terminal device in the first service area; and determine, when location verification does not need to be performed on the accessed terminal device on all of the plurality of beams, that location verification does not need to be performed on the accessed terminal device in the first service area.

S302: The terminal device initiates access to the first service area, and correspondingly, the network device receives the access initiated by the terminal device to the first service area.

The first service area is a service area in which location verification does not need to be performed on the accessed terminal device.

In a possible implementation, when performing cell selection, reselection, handover, or the like, the terminal device may use one or more service areas that meet an access (or camping) requirement as candidate service areas to initiate access, and may perform screening on the candidate service areas based on whether location verification needs to be performed on the accessed terminal device in the service areas.

For example, the terminal device may remove, from a set of candidate service areas that includes the one or more service areas and that meets the access (or camping) requirement, one or more second service areas in which location verification needs to be performed on the accessed terminal device, and select, from the set of candidate service areas, a first service area in which location verification does not need to be performed on the accessed terminal device to initiate access.

Alternatively, the terminal device may reduce, in the set of candidate service areas that includes the one or more service areas and that meets the access (or camping) requirement, access priorities of one or more second service areas in which location verification needs to be performed on the accessed terminal device (for example, reduce the access priority to a lowest level), and select, based on access priorities of candidate service areas in the set of candidate service areas, a service area to initiate access.

For example, the service area is a cell, and the terminal device is a terminal device that does not support location verification. Refer to FIG. 5. A set of candidate cells that meets an access (or camping) requirement of the terminal device includes a cell 1 and a cell 2, and location verification needs to be performed on the accessed terminal device in the cell 2. The terminal device may remove the cell 2 from the set of candidate cells, and select, from the set of candidate cells, the cell 1 in which location verification does not need to be performed on the accessed terminal device to initiate access.

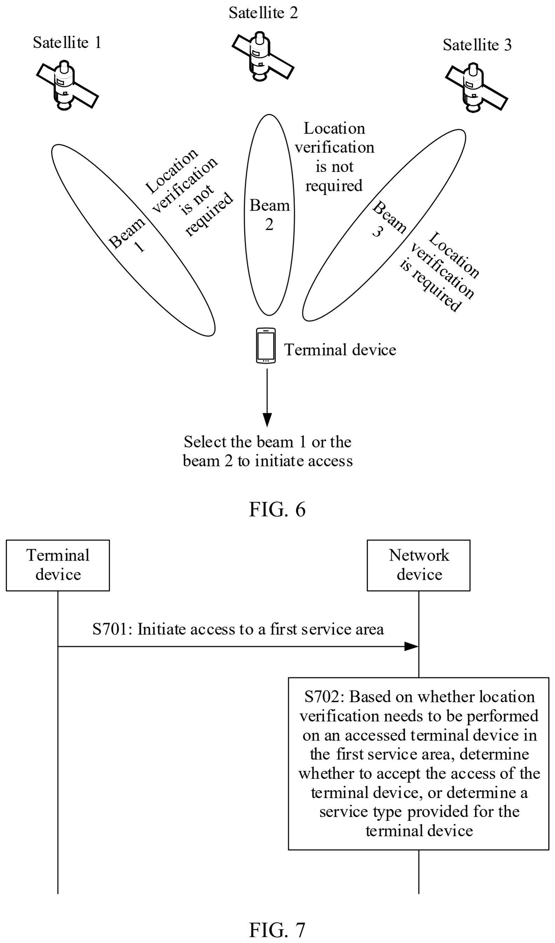

Refer to FIG. 6. A set of candidate beams that meets an access (or camping) requirement of a terminal device includes a beam 1, a beam 2, and a beam 3, and location verification needs to be performed on the accessed terminal device on the beam 3. The terminal device may remove the beam 3 from the set of candidate beams, and select, from the set of candidate beams, the beam 1 or the beam 2 on which location verification does not need to be performed on the accessed terminal device to initiate access.

In some implementations, the terminal device may further perform screening on the candidate service areas in the set of candidate service areas based on a distance between a reference point of each candidate service area in the set of candidate service areas and a boundary between geographical areas, and select a candidate service area to initiate access.

For example, the set of candidate service areas includes M candidate service areas, the terminal device may determine, based on a location of a reference point of each of the M candidate service areas, a distance between the reference point of each of the M candidate service areas and a boundary between geographical areas, and determine that location verification needs to be performed on the accessed terminal device in N candidate service areas that are in the M candidate service areas and whose reference points have a smallest distance from the boundary between geographical areas or determine the N candidate service areas as candidate service areas that are not recommended to be accessed. The terminal device may select, from remaining M-N candidate service areas in the set of candidate service areas, a candidate service area to initiate access, where M and N are integers, N is less than M, and N may be determined based on M. For example, N is M-1 or N is M-2; or N is an integer part of a product of M and a specified proportional coefficient, or the like.

In some implementations, if the candidate service area in the set of candidate service areas has a corresponding access (or camping) priority, the terminal device may further select, based on the access priority corresponding to the candidate service area in the set of candidate service areas and whether location verification needs to be performed on the accessed terminal device in the candidate service area, the candidate service area to initiate access.

For example, the set of candidate service areas includes a service area 1 and a service area 2, location verification needs to be performed on the accessed terminal device in the service area 1, and location verification does not need to be performed on the accessed terminal device in the service area 2. An access priority of a service area is determined based on signal quality of the service area, signal quality of the service area 1 is higher than signal quality of the service area 2, and an access priority of the service area 1 is higher than an access priority of the service area 2. When the terminal device selects a service area to initiate access, different from a conventional condition in which the terminal device selects the service area 1 to initiate access, when considering whether location verification needs to be performed on the accessed terminal device in a service area, the terminal device may preferably select the service area 2 in which location verification does not need to be performed on the accessed terminal device to initiate access.

In addition, it may be understood that, when the terminal device (for example, a terminal device that does not support location verification) performs cell selection, reselection, handover, or the like, if location verification needs to be performed on the accessed terminal device in all candidate service areas in a set of candidate service areas that meets an access (or camping) requirement and that is determined by the terminal device, the terminal device may alternatively not perform cell selection, reselection, or handover, and attempt to perform cell selection, reselection, or handover after the terminal device changes the location.

For example, the terminal device camps on a service area 3. If a candidate service area that meets the access (or camping) requirement and that is determined by the terminal device includes only a service area 2, and location verification needs to be performed on the accessed terminal device in the service area 2, the terminal device may not perform handover.

S303: Based on whether position verification needs to be performed on the accessed terminal device in the first service area, the network device determines whether to accept the access of the terminal device, or determines a service type provided for the terminal device.

In a possible implementation, the network device may determine, based on whether location verification needs to be performed on the accessed terminal device in the first service area, whether to accept the access of the terminal device.

For example, when location verification does not need to be performed on the accessed terminal device in the first service area, the network device may determine, without considering whether the terminal device supports location verification, to accept the access initiated by the terminal device to the first service area.

When location verification needs to be performed on the accessed terminal device in the first service area, if the terminal device supports location verification, the network device may determine to accept the access initiated by the terminal device to the first service area, and may determine, based on the location of the terminal device after the location verification on the terminal device succeeds, to provide the service that complies with the laws and regulations of the geographical area in which the terminal device is located.

When location verification needs to be performed on the accessed terminal device in the first service area, if the terminal device does not support location verification, the network device may determine to reject the access initiated by the terminal device to the first service area.

In another possible implementation, the network device may accept the access initiated by the terminal device to the first service area, but determine, based on whether location verification needs to be performed on the accessed terminal device in the first service area, the service type provided for the terminal device.

For example, when location verification does not need to be performed on the accessed terminal device in the first service area, the network device determines to provide a service of a first service type for the terminal device.

When location verification needs to be performed on the accessed terminal device in the first service area, if the terminal device supports location verification, the network device determines to provide the service of the first service type for the terminal device.

When location verification needs to be performed on the accessed terminal device in the first service area, if the terminal device does not support location verification, the network device determines to provide a service of a second service type for the terminal device.

The first service type may include an emergency call service and a non-emergency call service (for example, a common session service), and the second service type may include only an emergency call service.

In this embodiment of this application, when the terminal device does not support location verification, and location verification needs to be performed on the accessed terminal device in the service area to which the terminal device initiates access, in an access process of the terminal device, a network side (for example, an access network side and a core network side) rejects the access initiated by the terminal device or rejects registration of the terminal device with a core network. Alternatively, although the terminal device is allowed to register with the core network, the terminal device can be provided with only a limited service. For example, the terminal device can be provided with only the emergency call service, and cannot be provided with a service type other than the emergency call service.

When the terminal device can be provided with only the service of the second service type, the terminal device may choose, based on a service requirement of the terminal device, to exit or continue communication. If the terminal device chooses to exit, the terminal device may exit to an idle mode and then perform cell selection, reselection, or handover again.

Information about whether the terminal device supports location verification may be determined by the network device based on first information sent by the terminal device in a process like access. The first information may include the information about whether the terminal device supports location verification and/or a version number supported by the terminal device, where the version number may be used to determine whether the terminal device supports location verification.

For example, if the version number that is supported by the terminal device and that is included in the first information is R17, and the terminal device whose version number is R17 does not support location verification, the network device may determine that the terminal device does not support location verification.

In this embodiment of this application, an access manner in which the terminal device does not perform verification on information first may be further supported, for example, an access manner in which the network device does not indicate whether location verification needs to be performed on the accessed terminal device in the service area, and the terminal device does not consider whether location verification needs to be performed on the accessed terminal device in the service area to which the terminal device initiates access.

FIG. 7 is a diagram of another access method according to an embodiment of this application. The method includes the following steps.

S701: A terminal device initiates access to a first service area, and correspondingly, a network device receives the access initiated by the terminal device to the first service area.

S702: Based on whether position verification needs to be performed on the accessed terminal device in the first service area, the network device determines whether to accept the access of the terminal device, or determines a service type provided for the terminal device.

In this embodiment of this application, when the terminal device initiates access, a factor of whether location verification needs to be performed on the accessed terminal device in the service area to which the terminal device initiates access may not be considered. Based on whether location verification needs to be performed on the accessed terminal device in the service area to which the terminal device initiates access, the network device corresponding to the service area to which the terminal device initiates access determines whether to accept the access of the terminal device, or determines the service type provided for the terminal device.

In a possible implementation, the network device may determine, based on whether location verification needs to be performed on the accessed terminal device in the first service area, whether to accept the access of the terminal device.

For example, when location verification does not need to be performed on the accessed terminal device in the first service area, the network device may determine, without considering whether the terminal device supports location verification, to accept the access initiated by the terminal device to the first service area.

When location verification needs to be performed on the accessed terminal device in the first service area, if the terminal device supports location verification, the network device may determine to accept the access initiated by the terminal device to the first service area, and may determine, based on a location of the terminal device after the location verification on the terminal device succeeds, to provide a service that complies with laws and regulations of a geographical area in which the terminal device is located.

When location verification needs to be performed on the accessed terminal device in the first service area, if the terminal device does not support location verification, the network device may determine to reject the access initiated by the terminal device to the first service area.

In another possible implementation, the network device may accept the access initiated by the terminal device to the first service area, but determine, based on whether location verification needs to be performed on the accessed terminal device in the first service area, the service type provided for the terminal device.

For example, when location verification does not need to be performed on the accessed terminal device in the first service area, the network device determines to provide a service of a first service type for the terminal device.

When location verification needs to be performed on the accessed terminal device in the first service area, if the terminal device supports location verification, the network device determines to provide the service of the first service type for the terminal device.

When location verification needs to be performed on the accessed terminal device in the first service area, if the terminal device does not support location verification, the network device determines to provide a service of a second service type for the terminal device.

The first service type may include an emergency call service and a non-emergency call service (for example, a common session service), and the second service type may include only an emergency call service.

Information about whether the terminal device supports location verification may be determined by the network device based on first information sent by the terminal device in a process like access. The first information may include the information about whether the terminal device supports location verification and/or a version number supported by the terminal device, where the version number may be used to determine whether the terminal device supports location verification.

For example, if the version number that is supported by the terminal device and that is included in the first information is R17, and the terminal device whose version number is R17 does not support location verification, the network device may determine that the terminal device does not support location verification.

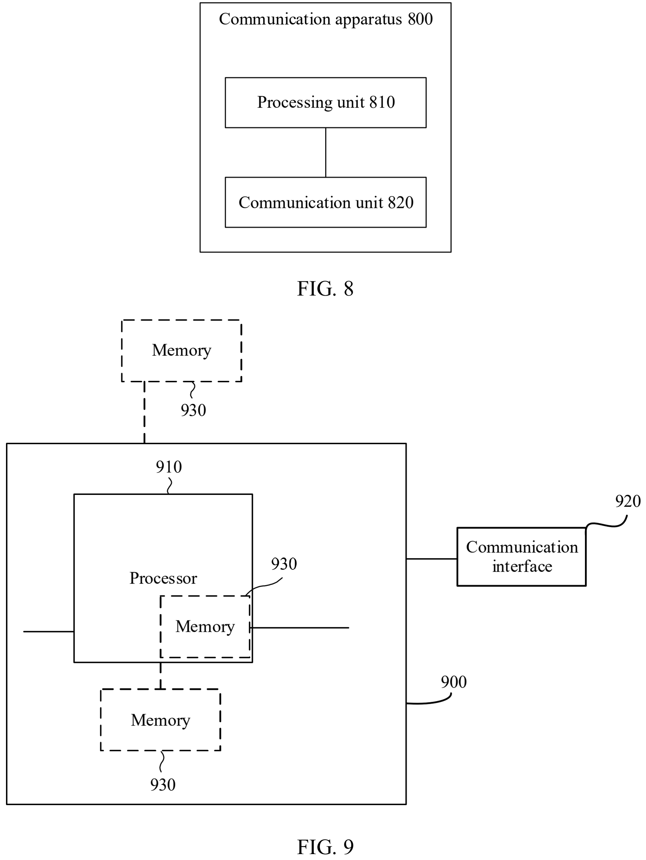

The following describes a communication apparatus provided in embodiments of this application. FIG. 8 is a diagram of a structure of a communication apparatus according to an embodiment of this application. The communication apparatus may include units or modules corresponding to all or some of the steps in the foregoing method embodiments, and may be configured to perform the steps performed by the first communication apparatus (for example, the terminal device) or the second communication apparatus (for example, the second terminal device) in the foregoing embodiments. For details, refer to the related descriptions in the foregoing method embodiments.

As shown in FIG. 8, the communication apparatus 800 includes a processing unit 810 and a communication unit 820. The processing unit 810 may be a processor or a processing circuit, and the communication unit 820 may alternatively be a transceiver unit or an input/output interface. The communication apparatus 800 may be configured to implement the steps performed by the first communication apparatus or the second communication apparatus.

When the communication apparatus 800 is configured to implement the steps performed by the first communication apparatus (for example, the terminal device) in the foregoing embodiments:
the processing unit 810 is configured to determine whether location verification needs to be performed on an accessed terminal device in one or more service areas; and
the communication unit 820 is configured to initiate access to a first service area, where the first service area belongs to the one or more service areas, and the first service area is a service area in which location verification does not need to be performed on the accessed terminal device.

In a possible design, the one or more service areas are candidate service areas to which the first communication apparatus initiates access, the one or more service areas form a set of candidate service areas to which the first communication apparatus initiates access, and the processing unit 810 is further configured to: when there is at least one second service area that is in the one or more service areas and in which location verification needs to be performed on the accessed terminal device, remove the at least one second service area from the set of candidate service areas.

In a possible design, when determining whether location verification needs to be performed on the accessed terminal device in the one or more service areas, the processing unit 810 is specifically configured to: receive, through the communication unit 820, a first message, where the first message includes one or more of first indication information indicating whether location verification needs to be performed on the accessed terminal device in the first service area, PLMN information corresponding to the first service area, and a location of a reference point of the first service area; and determine, based on the first message, whether location verification needs to be performed on the accessed terminal device in the first service area.

In a possible design, the first message includes the PLMN information corresponding to the first service area, and when determining, based on the first message, whether location verification needs to be performed on the accessed terminal device in the first service area, the processing unit 810 is specifically configured to: when the first service area corresponds to a PLMN of one geographical area, determine that location verification does not need to be performed on the accessed terminal device in the first service area.

In a possible design, the first message includes the location of the reference point of the first service area, and when determining, based on the first message, whether location verification needs to be performed on the accessed terminal device in the first service area, the processing unit 810 is specifically configured to: when a distance between the reference point of the first service area and a boundary between geographical areas is greater than a first threshold, determine that location verification does not need to be performed on the accessed terminal device in the first service area.

In a possible design, when determining whether location verification needs to be performed on the accessed terminal device in the one or more service areas, the processing unit 810 is specifically configured to: determine a distance between a reference point of each candidate service area in the set of candidate service areas and a boundary between geographical areas; and determine that location verification needs to be performed on the accessed terminal device in N candidate service areas that are in the set of candidate service areas and whose reference points have a smallest distance from the boundary between geographical areas, and that location verification does not need to be performed on the accessed terminal device in remaining M-N candidate service areas, where the set of candidate service areas includes M candidate service areas, M and N are integers, and N is less than M.

In a possible design, the first communication apparatus does not support location verification.

When the communication apparatus 800 is configured to implement the steps performed by the second communication apparatus (for example, the network device) in the foregoing embodiments:
the communication unit 820 is configured to receive access initiated by a first communication apparatus to a first service area; and
the processing unit 810 is configured to: based on whether location verification needs to be performed on an accessed terminal device in the first service area, determine whether to accept the access of the first communication apparatus, or determine a service type provided for the first communication apparatus.

In a possible design, when determining, based on whether location verification needs to be performed on the accessed terminal device in the first service area, whether to accept the access of the first communication apparatus, the processing unit 810 is specifically configured to: when location verification does not need to be performed on the accessed terminal device in the first service area, determine to accept the access of the first communication apparatus; when location verification needs to be performed on the accessed terminal device in the first service area, and the first communication apparatus supports location verification, determine to accept the access of the first communication apparatus; or when location verification needs to be performed on the accessed terminal device in the first service area, and the first communication apparatus does not support location verification, determine to reject the access of the first communication apparatus.

In a possible design, when determining, based on whether location verification needs to be performed on the accessed terminal device in the first service area, the service type provided for the first communication apparatus, the processing unit 810 is specifically configured to: when location verification does not need to be performed on the accessed terminal device in the first service area, determine to provide a service of a first service type for the first communication apparatus; when location verification needs to be performed on the accessed terminal device in the first service area, and the first communication apparatus supports location verification, determine to provide a service of a first service type for the first communication apparatus; or when location verification needs to be performed on the accessed terminal device in the first service area, and the first communication apparatus does not support location verification, determine to provide a service of a second service type for the first communication apparatus.

In a possible design, the communication unit 820 is further configured to send a first message to the first communication apparatus, where the first message includes one or more of first indication information indicating whether location verification needs to be performed on the accessed terminal device in the first service area, PLMN information corresponding to the first service area, and a location of a reference point of the first service area.

In a possible design, the communication unit 820 is further configured to receive first information from the first communication apparatus, where the first information indicates whether the first communication apparatus supports location verification.

In a possible design, the first information includes information about whether the first communication apparatus supports location verification and/or a version number supported by the first communication apparatus, where the version number is used to determine whether the first communication apparatus supports location verification.

As shown in FIG. 9, this application further provides a communication apparatus 900, including a processor 910 and further including a communication interface 920. The processor 910 and the communication interface 920 are coupled to each other. It may be understood that the communication interface 920 may be a transceiver, an input/output interface, an input interface, an output interface, an interface circuit, or the like. Optionally, the communication apparatus 900 may further include a memory 930, configured to store instructions executed by the processor 910, or store input data required by the processor 910 to run the instructions, or store data generated after the processor 910 runs the instructions. The memory 930 may be a physically independent unit, or may be coupled to the processor 910, or the processor 910 includes the memory 930.

When the communication apparatus 900 is configured to implement the steps performed by the first communication apparatus (for example, the terminal device) or the second communication apparatus (for example, the network device) in the foregoing embodiments, the processor 910 may be configured to implement the function of the processing unit 810, and the communication interface 920 may be configured to implement the function of the communication unit 820.

It should be noted that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA), or another programmable logic device, a transistor logic device, a hardware component, or any combination thereof. The general-purpose processor may be a microprocessor or any conventional processor.

The method steps in embodiments of this application may be implemented by hardware, or may be implemented by a processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a network device or a terminal device. Certainly, the processor and the storage medium may alternatively exist as discrete components in a network device or a terminal device.

All or some of the foregoing embodiments may be implemented by software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or transmitted from one computer-readable storage medium to another computer-readable storage medium. For example, the computer programs or the instructions may be transmitted from one network device, terminal, computer, server, or data center to another network device, terminal, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In addition, it should be understood that, a term "for example" in embodiments of this application indicates giving an example, an illustration, or a description. Any embodiment or design scheme described as an "example" in this application should not be explained as being more preferred or having more advantages than another embodiment or design scheme. Exactly, use of the term example is intended to present a concept in a specific manner.

It may be understood that various numbers in embodiments of this application are merely used for distinguishing for ease of description, and are not used to limit the scope of embodiments of this application. Sequence numbers of the foregoing processes do not mean an execution sequence, and the execution sequences of the processes should be determined based on functions and internal logic of the processes.

## Claims

1. An access method, comprising:
determining, by a first communication apparatus, whether location verification needs to be performed on an accessed terminal device in one or more service areas; and
initiating, by the first communication apparatus, access to a first service area, wherein the first service area belongs to the one or more service areas, and the first service area is a service area in which location verification does not need to be performed on the accessed terminal device.

2. The method according to claim 1, wherein the one or more service areas are candidate service areas to which the first communication apparatus initiates access, the one or more service areas form a set of candidate service areas to which the first communication apparatus initiates access, and the method further comprises:
when there is at least one second service area that is in the one or more service areas and in which location verification needs to be performed on the accessed terminal device, removing, by the first communication apparatus, the at least one second service area from the set of candidate service areas.

3. The method according to claim 1 or 2, wherein determining, by the first communication apparatus, whether location verification needs to be performed on the accessed terminal device in the one or more service areas comprises:
receiving, by the first communication apparatus, a first message, wherein the first message comprises one or more of first indication information indicating whether location verification needs to be performed on the accessed terminal device in the first service area, public land mobile network PLMN information corresponding to the first service area, and a location of a reference point of the first service area; and
determining, by the first communication apparatus based on the first message, whether location verification needs to be performed on the accessed terminal device in the first service area.

4. The method according to claim 3, wherein the first message comprises the PLMN information corresponding to the first service area, and determining, by the first communication apparatus based on the first message, whether location verification needs to be performed on the accessed terminal device in the first service area comprises:
when the first service area corresponds to a PLMN of one geographical area, determining, by the first communication apparatus, that location verification does not need to be performed on the accessed terminal device in the first service area.

5. The method according to claim 3, wherein the first message comprises the location of the reference point of the first service area, and determining, by the first communication apparatus based on the first message, whether location verification needs to be performed on the accessed terminal device in the first service area comprises:
when a distance between the reference point of the first service area and a boundary between geographical areas is greater than a first threshold, determining, by the first communication apparatus, that location verification does not need to be performed on the accessed terminal device in the first service area.

6. The method according to claim 2, wherein determining, by the first communication apparatus, whether location verification needs to be performed on the accessed terminal device in the one or more service areas comprises:
determining, by the first communication apparatus, a distance between a reference point of each candidate service area in the set of candidate service areas and a boundary between geographical areas; and
determining, by the first communication apparatus, that location verification needs to be performed on the accessed terminal device in N candidate service areas that are in the set of candidate service areas and whose reference points have a smallest distance from the boundary between geographical areas, and that location verification does not need to be performed on the accessed terminal device in M-N candidate service areas other than the N candidate service areas, wherein the set of candidate service areas comprises M candidate service areas, M and N are integers, and N is less than M.

7. The method according to any one of claims 1 to 6, wherein the first communication apparatus does not support location verification.

8. An access method, comprising:
receiving, by a second communication apparatus, access initiated by a first communication apparatus to a first service area; and
based on whether location verification needs to be performed on an accessed terminal device in the first service area, determining, by the second communication apparatus, whether to accept the access of the first communication apparatus, or determining a service type provided for the first communication apparatus.

9. The method according to claim 8, wherein determining, by the second communication apparatus based on whether location verification needs to be performed on the accessed terminal device in the first service area, whether to accept the access of the first communication apparatus comprises:
when location verification does not need to be performed on the accessed terminal device in the first service area, determining, by the second communication apparatus, to accept the access of the first communication apparatus;
when location verification needs to be performed on the accessed terminal device in the first service area, and the first communication apparatus supports location verification, determining, by the second communication apparatus, to accept the access of the first communication apparatus; or
when location verification needs to be performed on the accessed terminal device in the first service area, and the first communication apparatus does not support location verification, determining, by the second communication apparatus, to reject the access of the first communication apparatus; and
determining, by the second communication apparatus based on whether location verification needs to be performed in the first service area, the service type provided for the first communication apparatus comprises:
when location verification does not need to be performed on the accessed terminal device in the first service area, determining, by the second communication apparatus, to provide a service of a first service type for the first communication apparatus;
when location verification needs to be performed on the accessed terminal device in the first service area, and the first communication apparatus supports location verification, determining, by the second communication apparatus, to provide a service of a first service type for the first communication apparatus; or
when location verification needs to be performed on the accessed terminal device in the first service area, and the first communication apparatus does not support location verification, determining, by the second communication apparatus, to provide a service of a second service type for the first communication apparatus.

10. The method according to claim 8 or 9, wherein the method further comprises:
sending, by the second communication apparatus, a first message to the first communication apparatus, wherein the first message comprises one or more of first indication information indicating whether location verification needs to be performed on the accessed terminal device in the first service area, public land mobile network PLMN information corresponding to the first service area, and a location of a reference point of the first service area.

11. The method according to claim 9, wherein before determining, by the second communication apparatus based on whether location verification needs to be performed on the accessed terminal device in the first service area, whether to accept the access of the first communication apparatus, or the service type provided for the first communication apparatus, the method further comprises:
receiving, by the second communication apparatus, first information from the first communication apparatus, wherein the first information indicates whether the first communication apparatus supports location verification.

12. The method according to claim 11, wherein the first information comprises information about whether the first communication apparatus supports location verification and/or a version number supported by the first communication apparatus, wherein the version number is used to determine whether the first communication apparatus supports location verification.

13. A communication apparatus, comprising:
a communication unit, configured to: receive and send information; and
a processing unit, configured to perform the method according to any one of claims 1 to 7 or the method according to any one of claims 8 to 12 by using the communication unit.

14. A communication apparatus, comprising at least one processor, wherein the at least one processor is configured to perform the method according to any one of claims 1 to 7 or the method according to any one of claims 8 to 12.

15. A communication system, comprising:
a first communication apparatus, configured to perform the method according to any one of claims 1 to 7; and
a second communication apparatus, configured to perform the method according to any one of claims 8 to 12.

16. A computer-readable storage medium, wherein the computer-readable storage medium stores a computer program or instructions, and when the computer program or the instructions are executed by a communication apparatus, the method according to any one of claims 1 to 7 or the method according to any one of claims 8 to 12 is implemented.

17. A chip, wherein the chip reads a computer program stored in a memory, to perform the method according to any one of claims 1 to 7 or the method according to any one of claims 8 to 12.

18. A computer program product, wherein the computer program product comprises computer program code, and when the computer program code is run, the method according to any one of claims 1 to 7 or the method according to any one of claims 8 to 12 is implemented.
